# EUROPÄISCHE PATENTSCHRIFT

(11) **EP 3 075 657 B1**
(45) Veröffentlichungstag und Bekanntmachung des Hinweises auf die Patenterteilung: **30.01.2019**
(21) Anmeldenummer: 16162160.2
(22) Anmeldetag: 24.03.2016
(51) Int. Cl.: B64D 1/04, B64D 7/00, B64D 37/12, F41F 7/00, B64D 1/08, F41F 3/065, F41F 5/00, F41F 3/052, F41F 3/06

(54) **MULTIFUNKTIONS-POD FÜR EIN FLUGZEUG**
MULTIFUNCTION POD FOR AN AIRCRAFT
NACELLE MULTIFONCTION POUR UN AVION

(30) Priorität: 31.03.2015 DE 102015004111
(43) Veröffentlichungstag der Anmeldung: 05.10.2016
(73) Patentinhaber: Airbus Defence and Space GmbH, 85521 Ottobrunn (DE)
(72) Erfinder: Christof, Horst, 85653 Aying (DE)
(74) Vertreter: Isarpatent

(56) Entgegenhaltungen:
- WO-A2-2013/121031
- CH-A- 431 287
- GB-A- 754 429
- GB-A- 777 919
- GB-A- 780 722
- US-A- 2 731 885

## Beschreibung

Verschiedene Ausführungsformen betreffen allgemein ein Flugzeug mit einem Multifunktions-Pod.

GB784429 zeigt einen solchen Multifunktions-Pod der in drei Bereiche aufgeteilt ist und verschiedene Ausrüstungen, beziehungsweise Treibstoff aufnehmen kann.

Moderne Flugzeuge, insbesondere Kampflugzeuge, weisen in der Regel nur eine begrenzte Zahl von Außenlastträgern zur Befestigung von Waffen oder Tankbehältern, sogenannten Pods, auf. Um die Reichweite eines Kampflugzeugs zu erhöhen sind beispielsweise zusätzliche Tankbehälter, sogenannte Abwurfstanks notwendig. Bei der Benutzung von Abwurfstanks steht folglich nur noch eine reduzierte Anzahl von Außenlastträgern für die Beladung des Flugzeugs mit anderen Lasten, wie beispielsweise Waffen zur Verfügung. Das Flugzeug kann somit weniger Lasten transportieren, oder die Reichweite des Flugzeugs ist auf die Reichweite eingeschränkt, die sich durch die Ausnutzung der im Flugzeug selbst angeordneten Tankbehälter erzielen lassen würde.
Davon ausgehend ist es Aufgabe der Erfindung, einen verbesserten Pod für ein Flugzeug zur Verfügung zu stellen, der die oben genannten Nachteile vermeidet.

Diese Aufgabe wird mit einem Flugzeug mit den Merkmalen des Anspruchs 1 gelöst. Beispielhafte Ausführungsformen sind in den abhängigen Ansprüchen dargestellt.

Die Aufgabe wird durch ein Flugzeug mit einem Multifunktions-Pod gelöst. Der Multifunktions-Pod weist unter anderem mindestens zwei voneinander getrennte Bereiche auf. Mindestens ein erster Bereich des Pods ist zur Aufnahme von Treibstoff vorgesehen. Ein zweiter Bereich des Pods weist mindestens eine Aufnahmevorrichtung zur lösbaren Anbringung mindestens einer weiteren Last auf. Die weitere Last ist über eine an der dem Flugzeug abgewandten Seite des Pods aufweisende Ladeöffnung an der Aufnahmevorrichtung lösbar anbringbar.

Der Erfindung liegt der Gedanke zugrunde, ein Flugzeug mit einem Multifunktions-Pod bereitzustellen, welcher sowohl einen Bereich für die Aufnahme von Treibstoff aufweist als auch wenigstens einen zweiten oder weiteren Bereich zur lösbaren Anbringung von einer weiteren Last aufweist. Der Multifunktions-Pod (oder auch nur Pod genannt) weist somit mehrere Funktionen auf, zum Einem die Funktion als externer Tankbehälter und zum Weiteren als Aufnahmebehälter für weitere lösbar angebrachte Lasten. Dadurch wird die für das Flugzeug zur Verfügung stehende Treibstoffmenge erhöht. Gleichzeitig wird die Anzahl der zur Verfügung stehenden Außenlastträger durch die im Pod zur Verfügung stehende Aufnahmevorrichtung beibehalten oder sogar erhöht.
Als Multifunktions-Pod oder Pod ist ein Aufnahmebehälter zu verstehen, der an einem Flugzeug, beispielsweise an der Unterseite des Rumpf oder der Unterseite der Tragflächen lösbar befestigt werden kann. Derartige Pods sind beispielsweise an Außenlastträgern des Flugzeugs befestigt und können während des Flugs von dem Flugzeug gelöst werden. Bei einer Verwendung als Behälter zur Aufnahme von Treibstoff werden diese beispielsweise auch als Abwurftank bezeichnet.
Der Pod weist eine, auf der dem Flugzeug abgewandten Seite, Ladeöffnung auf. Als dem Flugzeug abgewandt, ist die Seite zu verstehen, die bei einer Anbringung des Pods auf der Unterseite des Rumpfes oder der Tragfläche, von dem Flugzeug abgewandt ist, hier folglich auf der Unterseite des Pods. Bei einer Anbringung des Pods beispielsweise auf der Oberseite der Tragfläche kann die Ladeöffnung auf der dem Flugzeug abgewandten Seite somit auch beispielsweise, bei einer Normalposition des Flugzeugs auf der Oberseite des Pods sein. Beispielsweise kann bei einer Drehung des Flugzeugs im Flug die Ladeöffnung dann, beispielweise für das Lösen einer in dem zweiten Bereich angebrachten Last, nach unten gerichtet sein, so dass die Last abgeworfen werden kann.

Erfindungsgemäß sind über die Aufnahmevorrichtung unterschiedliche Arten von Lasten variabel in dem zweiten Bereich lösbar anbringbar. In dem zweiten Bereich des Pods sind über die Aufnahmevorrichtung unterschiedliche Art und Anzahl von Lasten lösbar anbringbar. Beispielsweise kann an der Aufnahmevorrichtung wenigstens ein Außenlastträger oder vergleichbarer Lastenträger oder Träger angebracht sein. Alternativ können auch mehrere, beispielsweise zwei oder mehrere Außenlastträger oder vergleichbare Lastenträger zur Aufnahme von mehreren weiteren Lasten parallel und/oder seriell in dem zweiten Bereich angeordnet sein. Dies hat den Vorteil, dass der Pod für unterschiedliche Art und Anzahl von Lasten nutzbar ist.
Bevorzugt ist die weitere Last mindestens ein Behälter zur Aufnahme von Treibstoff. Um die Reichweite des Flugzeugs weiter zu erhöhen kann beispielsweise in dem zweiten Bereich ein Behälter zur Aufnahme von Treibstoff angebracht werden. Dies hat den Vorteil, dass durch den Treibstoff aus dem ersten Bereich und dem Treibstoff aus dem zweiten Bereich des Pods die Reichweite des Flugzeugs wesentlich erhöht werden kann.
Bevorzugt weist die Aufnahmevorrichtung einen Adapter zur Entnahme von Treibstoff aus dem Behälter an das Flugzeug oder zur Befüllung des Behälters mit Treibstoff aus dem Flugzeug über eine externe Betankungsvorrichtung auf. Die Aufnahmevorrichtung kann beispielsweise mit einem Außenlastträger versehen werden, der einen Adapter aufweist über den eine Treibstoffverbindung zwischen dem Tankbehälter und dem Flugzeug hergestellt werden kann. Dies hat den Vorteil, dass über den Adapter Treibstoff aus dem Pod in das Flugzeug oder umgekehrt aus dem Flugzeug, beispielsweise bei einer Luftbetankung, in den Pod befördert werden kann.

Bevorzugt ist die weitere Last mindestens eine Rakete oder mindestens eine Bombe. Als Rakete ist beispielsweise ein Lenkflugkörper zu verstehen. Hierbei können die Raketen beispielsweise selbständig zielsuchende Raketen (fire and forget), ferngesteuerte Lenkflugkörper oder halbautomatische Lenkflugkörper sein. Als Bombe ist beispielsweise eine ungelenkte, dumme Bombe oder eine sogenannte präzisionsgelenkte Bombe (smart bomb) zu verstehen. Vorzugsweise sind die Raketen derart eingerichtet, dass diese nach dem Lösen von dem Pod eine kurze Strecke fallen, vorzugsweise wenigstens soweit, dass sie den Ladebereich des Pods verlassen haben, und erst nach dem Verlassen des Pods gezündet werden und in Richtung Ziel fliegen. Dies hat den Vorteil, dass das durch die weiteren Raketen oder Bomben die Verteidigungs- bzw. Angriffsmöglichkeiten des Flugzeugs erhöht werden können. Darüber hinaus bietet die Unterbringen von Raketen oder Bomben in dem Pod den Vorteil, dass von außen nicht erkennbar ist, ob und wie das Flugzeug bewaffnet ist, oder wie sich die Reichweitenerhöhung darstellt.

Bevorzugt weist die Aufnahmevorrichtung mindestens eine Abwurfvorrichtung für eine oder mehrere Raketen auf. Mittels der wenigstens einen Abwurfvorrichtung, beispielsweise ein HDERU (Heavy Duty Ejector Release Unit) oder eine vergleichbare Haltevorrichtung, können eine oder mehrere Raketen lösbar befestigt werden, die beispielsweise bei Erreichen des Zielgebiets freigegeben werden können. Dies hat den Vorteil, dass der Pod neben dem transportierten Treibstoff auch mindestens eine Rakete zur Erhöhung der Verteidigungs- bzw. Angriffsmöglichkeiten des Flugzeugs befördern kann. Die wenigstens eine Abwurfvorrichtung ist vorzugsweise variabel an der Aufnahmevorrichtung anbringbar. Dies hat den Vorteil, dass beispielsweise die Position der Abwurfvorrichtung in Längsrichtung oder Querrichtung des Pods passend zu der jeweiligen anzubringenden Last oder der Anzahl der Lasten verändert werden kann.

Bevorzugt weist die Aufnahmevorrichtung mindestens eine Abwurfvorrichtung für eine oder mehrere Bomben auf. Mittels der wenigstens einen Abwurfvorrichtung, beispielsweise ein HDERU (Heavy Duty Ejector Release Unit), können eine oder mehrere Bomben lösbar befestigt werden, die beispielsweise bei Erreichen des Zielgebiets freigegeben werden können. Dies hat den Vorteil, dass der Pod neben dem transportierten Treibstoff auch mindestens eine Bombe zur Erhöhung der Verteidigungs- bzw. Angriffsmöglichkeiten des Flugzeugs befördern kann. Die wenigstens eine Abwurfvorrichtung oder Haltevorrichtung ist vorzugsweise variabel an der Aufnahmevorrichtung anbringbar. Dies hat den Vorteil, dass beispielsweise die Position und/oder die Anzahl der Abwurfvorrichtung in Längsrichtung oder Querrichtung des Pods, passend zu der jeweiligen anzubringenden Last oder der Anzahl der Lasten bzw. der Bomben, verändert werden kann.

Bevorzugt weist die Aufnahmevorrichtung mindestens einen Adapter zur Steuerung des Abwurfs der Raketen oder Bomben über das Flugzeug auf. Um die Rakete/Raketen und/oder die Bombe/Bomben beispielsweise wie gewünscht in der Nähe des Zielgebiets freizugeben, weist die Aufnahmevorrichtung mindestens einen Adapter auf, der vorzugsweise mit einer Freigabevorrichtung beispielsweise im Cockpit des Flugzeugs verbunden ist und über den Signale an die Abwurfvorrichtung übermittelt werden können, bzw. von dieser beispielsweise an das Cockpit übermittelt werden können. Über den Adapter kann beispielsweise ein Signal an die Abwurfvorrichtung übermittelt werden, damit die Abwurfvorrichtung ein Rakete oder Bombe freigibt. Dies hat den Vorteil, dass über den Adapter beispielsweise weitere Informationen, beispielsweise aus dem Cockpit an eine selbständig zielsuchende Rakete oder eine präzisionsgelenkte Bombe, beispielsweise Zielkoordinaten, übermittelt werden können oder Statusinformationen der Rakete oder Bombe an einen Bordcomputer im Flugzeug oder an das Cockpit übermittelt werden können.

Bevorzugt sind mehrere Raketen und/oder Bomben parallel und/oder hintereinander an der Aufnahmevorrichtung lösbar anbringbar. Beispielsweise können an der Aufnahmevorrichtung mehrere Abwurfvorrichtungen, beispielsweise HDERUs angeordnet sein. Hierbei können beispielsweise zwei oder mehrere HDERUs seriell, d.h. in Längsrichtung des Pods hintereinander innerhalb des Ladebereichs, angeordnet sein. Weiter können beispielsweise zwei oder mehrere HDERUs nebeneinander an der Aufnahmevorrichtung angeordnet sein. Beispielsweise können auch zwei HDERUs parallel für die Aufnahme von beispielsweise zwei kleineren Raketen oder Bomben angeordnet sein und seriell dazu ein einzelne HDERU für die Aufnahme einer größeren Rakete oder Bombe. Dies hat den Vorteil, dass durch eine Aufnahmevorrichtung die eine nahezu unbegrenzte Variabilität hinsichtlich der Anbringung der Abwurfvorrichtungen aufweist, nahezu beliebige Raketen oder Bomben oder Kombinationen von Raketen und/oder Bomben in dem Ladebereich des Pods lösbar angebracht werden können. Die Anzahl bzw. Anordnung ist lediglich durch die Größe des Ladebereichs des Pods begrenzt.

Bevorzugt ist die weitere Last mindestens eine Sensorvorrichtung. Beispielsweise ist die weitere Last eine Sensorvorrichtung zur Aufklärung und/oder Überwachung eines Fluggebiets oder eines Territoriums. Alternativ kann die weitere Last auch ein Kommunikationsmodul beispielsweise zur Kommunikation des Flugzeugs mit weiteren Flugzeugen sein. Darüber hinaus kann auch die Sensorvorrichtung weitere eine Kommunikationsvorrichtung aufweisen. Dies hat den Vorteil, dass das Flugzeug über den Pod neben der Beförderung von Treibstoff weitere Fähigkeiten beispielsweise zur Aufklärung und/oder Überwachung aufweisen kann. Darüber hinaus hat dies den Vorteil, dass von außen nicht erkennbar bzw. nur sehr schwer erkennbar ist, ob eine Flugmission mit einem Sensor durchgeführt wird oder nicht.

Bevorzugt weist die Aufnahmevorrichtung mindestens einen Adapter zur Kommunikation des Flugzeuges mit der Sensoreinrichtung auf. Um Daten mit der Sensorvorrichtung auszutauschen, d.h. in Richtung vom Flugzeug zu der Sensorvorrichtung oder von der Sensorvorrichtung zu dem Flugzeug, weist die Aufnahmevorrichtung einen Adapter auf, der mit der Sensorvorrichtung verbindbar oder koppelbar ist. Der Adapter kann beispielsweise einen kabelgebundenen und/oder einen kabellosen Datenaustausch zwischen der Sensorvorrichtung und dem Flugzeug ermöglichen. Bei einer kabelgebundenen Ausführungsform ist beispielsweise die Aufnahmevorrichtung mit einer Buchse versehen, in die ein Stecker eines Kabels, das mit der Sensorvorrichtung verbunden ist, gekoppelt werden kann. Die Buchse der Aufnahmevorrichtung ist beispielsweise mit dem Flugzeug über beispielsweise eine weitere kabelgebundene und/oder auch kabellose Verbindung verbunden. Dies hat den Vorteil, dass über den Pod neben der Beförderung von Treibstoff und "dummen" Lasten auch Lasten transportiert werden können, die einen Datenaustausch zu oder mit dem Flugzeug aufweisen.

Erfindungsgemäß weist der Pod wenigstens einen weiteren Bereich zur Aufnahme von Treibstoff auf. Bevorzugt weist der Pod zusätzlich zu dem ersten Bereich zum Transport von Treibstoff wenigstens einen oder auch mehrere weitere Bereich auf, in denen Treibstoff aufgenommen werden kann. Dies hat den Vorteil, dass die im Pod mitgeführte Treibstoffmenge erhöht ist.

Erfindungsgemäß sind die Bereiche des Pods zur Aufnahme von Treibstoff im vorderen und hinteren Bereich des Pods angeordnet. Beispielsweise sind der vordere und der hintere Bereich des Pods als Treibstoffbereich vorgesehen. Der vordere und hintere Bereich eines Pods weisen beispielsweise aus aerodynamischen Gründen eine konisch zulaufende Form auf, wobei der Zwischenbereich zumindest teilweise oder auch größtenteils eine möglichst gleichbleibende Außenkontur aufweist. Zur Aufnahme einer weiteren Last im Ladebereich kann es von Vorteil sein, wenn der Ladebereich beispielsweise in dem Bereich mit einer möglichst gleichbleibenden Außenkontur vorgesehen ist. Zur bestmöglichen Ausnutzung des Pods ist der Bereich mit einer zulaufenden Form oder mit einer nicht konstanten Außenform für die Aufnahme von Treibstoff vorgesehen, da die Form des Pods in dem Bereich für die Aufnahme von Treibstoff nahezu unerheblich ist. Für die Aufnahme von weiteren Lasten ist ein Ladebereich mit einer gleichbleibenden Form von Vorteil. Dies hat den Vorteil, dass sich dadurch nahezu der gesamte Ladebereich variabel für die Aufnahme von Lasten nutzen lässt. Weiter hat dies den Vorteil, dass neben der Beförderung einer oder mehrere weiterer Lasten, das zur Verfügung stehende Volumen des Pods für die weitere Aufnahme von Treibstoff möglichst optimal ausgenutzt werden kann. Darüber hinaus besteht der Vorteil, dass unabhängig von der Beladung im Lastbereich des Pods die Außengeometrie des Pods immer gleich ist. Dies erleichtert zudem die Flugzeug-Regelung durch das Flug-Kontroll-System des Flugzeugs.
Um eine möglichst gleichbleibende Lastverteilung des Pods zu erreichen können die Bereiche für die Aufnahme von Treibstoff möglichst Schwerpunktneutral verteilt angeordnet sein. Um eine möglichst optimale Schwerpunktsverteilung zu erreichen können darüber hinaus beispielsweise die Bereiche zur Aufnahme von Treibstoff im vorderen Bereich und im hinteren Bereich des Pods möglichst gleichgroß sein. Dies hat den Vorteil, dass bei einer gleichmäßigen Treibstoffaufnahme bzw. Treibstoffentnahme während des Flugs der Pod weiterhin möglichst im Gleichgewicht ist. Ein Umpumpen von Treibstoff zum Lastausgleich kann somit zumindest innerhalb des Pods selbst vermieden werden. Für den Lastausgleich des gesamten Flugzeugs kann es jedoch von Vorteil sein, wenn Treibstoff zwischen den verfügbaren Tankbehältern, intern und extern umgepumpt werden kann. Beispielsweise kann auch Treibstoff aus dem Flugzeugeigenen Tank in den Tankbereich des Pods zum Lastausgleich umgepumpt werden oder umgekehrt.

Der Bereich zur Aufnahme der weiteren Last ist erfindungsgemäß zwischen den Bereichen zur Aufnahme von Treibstoff angeordnet. Beispielweise ist der Bereich zur Aufnahme des Treibstoffs in zwei oder mehrere Unterbereiche oder Segmente unterteilt. Der Bereich zur Aufnahme der weiteren Last ist beispielsweise wenigstens teilweise zwischen den Bereichen für den Treibstoff angeordnet. Beispielsweise sind der vordere und der hintere Bereich des Pods als Treibstoffbereich vorgesehen und ein Zwischenbereich ist als Ladebereich zur Aufnahme einer weiteren Last vorgesehen. Hierbei können sich die Bereiche für den Treibstoff auch wenigstens teilweise in den Ladebereich erstrecken. Dies hat den Vorteil, dass das zur Verfügung stehende Volumen des Pods optimal ausgenutzt werden kann.

Erfindungsgemäß erstrecken sich die Bereiche zur Aufnahme von Treibstoff, auf der dem Flugzeug zugewandten Seite des Pods, zumindest teilweise in den zweiten Bereich. Der Multifunktions-Pod kann beispielsweise im Bereich der Aufnahmevorrichtung weitere Bereiche zur Aufnahme von Treibstoff aufweisen. Diese weiteren Tankbereiche sind beispielsweise oberhalb des zweiten Bereichs, d.h. des Ladebereichs, angeordnet. Über die Ladeöffnung kann auf der Unterseite der Ladebereich bestückt werden. Der erste Bereich zur Aufnahme von Treibstoff ist beispielsweise direkt mit dem weiteren Bereich zur Aufnahme von Treibstoff verbunden. Beispielsweise kann sich der erste Bereich über den weiteren Bereich in der Art erstrecken, dass ein gemeinsamer Tankbehälter vorliegt. Alternativ können zwei getrennte Tankbereiche vorgesehen sein, wobei einer der beiden als eigentlicher Tankbehälter oder Haupttank vorgesehen ist und der weitere als Ausgleichstank oder Zwischentank vorgesehen. Dies hat den Vorteil, dass das zur Verfügung stehende Volumen des Pods optimal ausgenutzt werden kann. Hierbei kann beispielsweise der Treibstoff über den Ausgleichs- bzw. Zwischentank aus dem eigentlichen Tankbehälter in das Flugzeug gepumpt, d.h. in dem Tankbehälter ist eine Pumpe angeordnet, die den Treibstoff aus dem Pod in das Flugzeug pumpt, oder gesaugt werden, d.h. in dem Flugzeug ist eine Pumpe angeordnet, die den Treibstoff aus dem Pod in das Flugzeug befördert.

Bevorzugt ist die Ladeöffnung mit mindestens einer Verschlussvorrichtung verschließbar. Die Verschlussvorrichtung kann beispielsweise einer oder mehreren, symmetrischen oder asymmetrischen Klappen, Jalousien, oder dergleichen aufweisen. Zur Betätigung der Verschlussvorrichtung ist vorzugsweise eine entsprechende Mechanik vorgesehen, die beispielsweise die Klappen bei Bedarf öffnen bzw. schließen kann Die Verschlussvorrichtung verschließt die Ladeöffnung nach außen. Bevorzugt ist die Verschlussvorrichtung aerodynamisch an die Außenkontur des Pods im Bereich der Ladeöffnung angepasst. Um die weitere Last oder die mehreren Lasten in dem Ladebereich über die Ladeöffnung anzubringen wir die Verschlussvorrichtung geöffnet. Während des Flugs ist die Ladeöffnung durch die Verschlussvorrichtung die meiste Zeit verschlossen. Zum Abwerfen von Lasten während des Flugs kann die Verschlussvorrichtung während des Flugs geöffnet werden und die Ladeöffnung freigeben. Dies hat den Vorteil, dass der Pod im Ladebereich eine möglichst aerodynamisch günstige Außenkontur aufweist. Darüber hinaus bietet die aerodynamische Verkleidung eine Optimierung der Aerodynamik des Flugzeugs, wodurch eine Reichweiten-Erhöhung bei gleicher Flugzeug-Beladung möglich ist. Zudem werden die Stealth-Eigenschaften des Flugzeugs bei gleicher Beladung durch den Einsatz des Pods verbessert.

In den Zeichnungen beziehen sich im Allgemeinen gleiche Bezugszeichen auf die gleichen Teile über die verschiedenen Ansichten hinweg. Die Zeichnungen sind nicht notwendigerweise maßstabsgetreu; Wert wird stattdessen im Allgemeinen auf die Veranschaulichung der Prinzipien der Erfindung gelegt. In der folgenden Beschreibung werden verschiedene Ausführungsformen der Erfindung beschrieben unter Bezugnahme auf die folgenden Zeichnungen, in denen:
- FIG. 1: verschiedene Ansichten einer ersten Ausführungsform des Multifunktions-Pods zeigt;
- FIG. 2: eine Schnittdarstellung einer weiteren Ausführungsform des Multifunktions-Pods zeigt;
- FIG. 3: verschiedene Ausführungsformen der Positionierung von Abwurfvorrichtungen zeigt;
- FIG. 4: verschiedene Ansichten einer Ausführungsform des Multifunktions-Pods mit einer Rakete zeigt;
- FIG. 5: verschiedene Ansichten einer Ausführungsform des Multifunktions-Pods mit einer Mehrzahl Bomben zeigt;
- FIG. 6: verschiedene Ansichten einer Ausführungsform des Multifunktions-Pods mit einem Tankbehälter als weitere Last zeigt; und
- Fig. 7: verschiedene Ansichten einer Ausführungsform des Multifunktions-Pods mit einer Sensorvorrichtung als weitere Last zeigt.

Die folgende detaillierte Beschreibung nimmt Bezug auf die beigefügten Zeichnungen, welche zur Erläuterung spezifische Details und Ausführungsformen zeigen, in welchem die Erfindung praktiziert werden kann.

Das Wort "beispielhaft" wird hierin verwendet mit der Bedeutung "als ein Beispiel, Fall oder Veranschaulichung dienend". Jede Ausführungsform oder Ausgestaltung, die hierin als "beispielhaft" beschrieben ist, ist nicht notwendigerweise als bevorzugt oder vorteilhaft gegenüber anderen Ausführungsformen oder Ausgestaltungen auszulegen.

In der folgenden ausführlichen Beschreibung wird auf die beigefügten Zeichnungen Bezug genommen, die Teil dieser bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsformen in einer Anzahl verschiedener Orientierungen positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

Im Rahmen dieser Beschreibung werden die Begriffe "verbunden", "angeschlossen" sowie "gekoppelt" verwendet zum Beschreiben sowohl einer direkten als auch einer indirekten Verbindung, eines direkten oder indirekten Anschlusses sowie einer direkten oder indirekten Kopplung. In den Figuren werden identische oder ähnliche Elemente mit identischen Bezugszeichen versehen, soweit dies zweckmäßig ist.

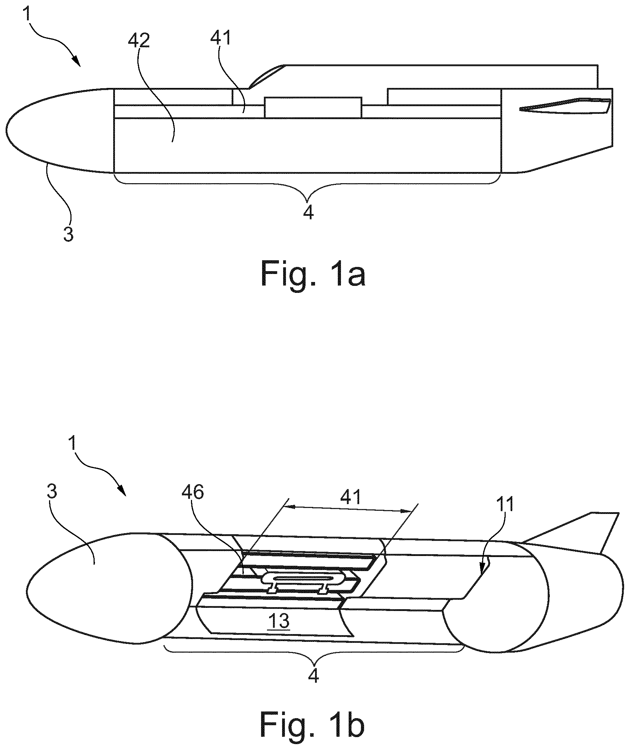

Figur 1 zeigt verschiedene Ansichten einer ersten Ausführungsform des Multifunktions-Pods 1. Hierbei ist ein Multifunktions-Pod in Figur 1a in einer Schnittdarstellung dargestellt und in Figur 1b in einer dreidimensionalen Ansicht.

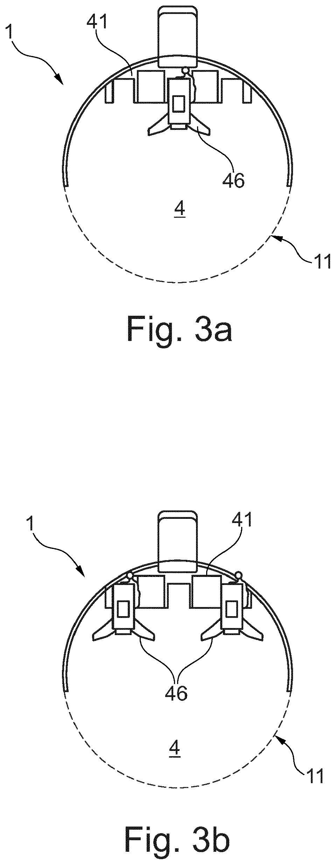

Der Multifunktions-Pod 1 weist in der dargestellten Ausführungsform einen ersten Bereich 3 zur Aufnahme von Treibstoff und einen weiteren Bereich 4 zur Aufnahme einer weiteren Last 42 auf. Der weitere Bereich 4 dient als Ladebereich für die Aufnahme von unterschiedlichen Arten von Lasten. Die weitere Last 42 kann über eine Ladeöffnung 11 auf der Unterseite, d.h. der dem Flugzeug abgewandten Seite des Pods 1, in den Ladebereich 4 eingebracht werden. In dem Ladebereich 4 kann die weitere Last 42 an einer Aufnahmevorrichtung 41 variabel befestigt werden. Wie in Figur 1b zu erkennen ist, erstreckt sich die Aufnahmevorrichtung 41 über einen Teilbereich des Ladebereichs 4 an dem oberen, dem Flugzeug zugewandten Wandabschnitt des Pods 1. Die Aufnahmevorrichtung 41 kann sich in einer weiteren nicht dargestellten Ausführungsform des Pods 1 auch über die gesamte Länge des Ladebereichs 4 erstrecken. Zur lösbaren Befestigung der weiteren Last 42 an der Aufnahmevorrichtung 41 kann beispielsweise eine odere mehrere Abwurfvorrichtungen oder Haltevorrichtungen, wie beispielsweise eine HDERU (Heavy Duty Ejector Release Unit), variabel an der Aufnahmevorrichtung 41 angebracht werden. In der dargestellten Ausführungsform weist die Aufnahmevorrichtung 41 mehrere nebeneinander liegende Schlitze oder Führungen bzw. Schienen auf, in denen beispielsweise Abwurfvorrichtungen oder Haltevorrichtungen befestigt werden können. Durch die Ausführung als Schlitz oder Führung bzw. Schiene können die Abwurfvorrichtungen oder Haltevorrichtungen in Längsrichtung der Schlitze oder Führungen bzw. Schienen, d.h. in der hier dargestellten Ausführungsform in Längsrichtung des Pods 1 variabel befestigt werden. Eine Detailansicht der Aufnahmevorrichtung 41 ist in Figur 3 dargestellt. In der dargestellten Ausführungsform weist der Pod 1 in den Seitenwänden im Bereich des Ladebereichs 4 zusätzlich Wartungsöffnungen 13 auf. Über die Wartungsöffnungen 13 besteht beispielsweise ein Zugang zu der Haltevorrichtung bzw. Abwurfvorrichtung in der Aufnahmevorrichtung 41.

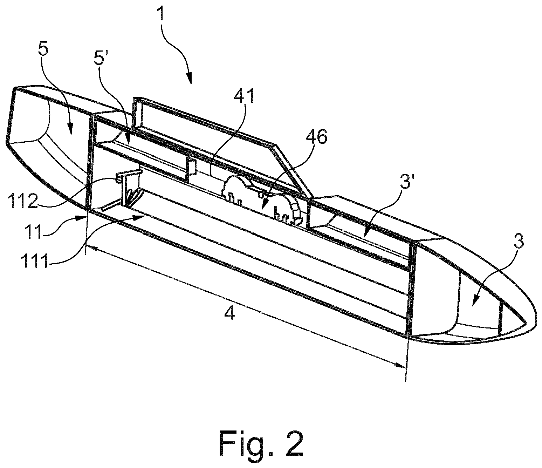

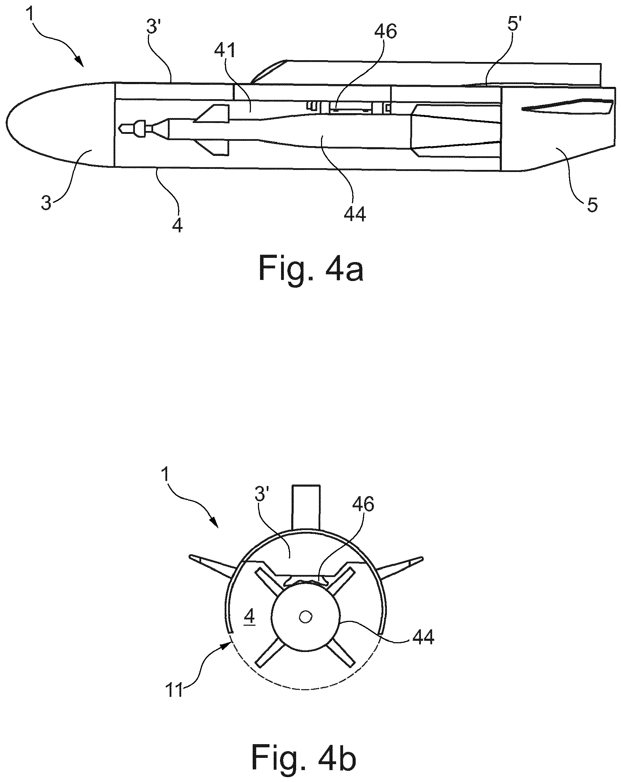

Figur 2 zeigt eine Schnittdarstellung einer weiteren Ausführungsform des Multifunktions-Pods 1. Der Pod 1 weist einen ersten Tankbereich 3 im vorderen Bereich des Pods 1, einen sogenannten fore Tank auf. Zusätzlich weist der Pod 1 noch einen weiteren Tankbereich 5 im rückwärtigen Bereich des Pods 1 auf, einen sogenannten aft Tank. Der erste Tankbereich 3 ist mit einem zusätzlichen Tankbereich 3', auf der dem Flugzeug zugewandten Seite des mittleren Bereichs 4 des Pods 1, verbunden. Ebenso ist der weitere Tankbereich 5 mit einem zusätzlichen Tankbereich 5', auf der dem Flugzeug zugewandten Seite des mittleren Bereichs 4 des Pods 1, verbunden. Zwischen den beiden zusätzlichen Tankbereichen 3' und 5' ist die Aufnahmevorrichtung 41 zur Aufnahme von Haltevorrichtungen bzw. Abwurfvorrichtungen 46 auf der dem Flugzeug zugewandten Seite des mittleren Bereichs 4 des Pods 1 angeordnet. Die Ladeöffnung 11 des Ladebereichs 4 ist mit einer Verschlussvorrichtung 11 verschließbar. Die Verschlussvorrichtung 11 besteht in der dargestellten Ausführungsform aus einem Verschlussmechanismus 112 und eines Verschlussklappe 111. Zum Bestücken des Ladebereichs 4 kann die Verschlussklappe 111 geöffnet werden und die weitere Last 42 (nicht dargestellt) kann an der Haltevorrichtung bzw. Abwurfvorrichtung 46 befestigt werden. Verschiedene beispielhafte Konfigurationen der Beladung des Ladebereichs 4 sind in den Figuren 4 bis 7 dargestellt.

Figur 3 zeigt verschiedene Ausführungsformen der Positionierung von Abwurfvorrichtungen 46. Hierbei zeigt die Figur 3a eine erste Konfiguration der Anordnung einer Abwurfvorrichtung 46 in der Aufnahmevorrichtung 41 des Pods 1. Die Aufnahmevorrichtung 41 weist in der dargestellten Ausführungsform des Pods 1 drei Schlitze auf, in denen Abwurfvorrichtungen 46 oder Haltevorrichtungen (nicht dargestellt) befestigt werden können. Durch die Ausbildung als Schlitz oder Führung bzw. Schiene, längs zur Erstreckungsrichtung des Pods 1, lassen sich Abwurfvorrichtungen 46 bzw. Haltevorrichtungen variabel anordnen. Bei der in der Figur 3a dargestellten Positionierung der Abwurfvorrichtung 46 kann beispielsweise eine weitere Last (nicht dargestellt) an der Abwurfvorrichtung 46 befestigt werden. Bei der in Figur 3b dargestellten Positionierung der Abwurfvorrichtungen 46 können beispielsweise zwei weitere Lasten (nicht dargestellt) nebeneinander an den Abwurfvorrichtungen 46 lösbar befestigt werden. Besteht beispielsweise der Bedarf, eine hinsichtlich der Abmessungen größere Last an der Abwurfvorrichtung 46 zu befestigen, ist die in Figur 3a dargestellte Ausführungsform von Vorteil. Bei der Befestigung von zwei kleineren Lasten ist beispielsweise die in Figur 3b dargestellte Ausführungsform von Vorteil. Hier können 2 kleinere Lasten nebeneinander befestigt werden. Die in Figur 3a und Figur 3b dargestellten Positionierungen der Abwurfvorrichtungen 46 können beliebig miteinander kombiniert werden. Dadurch können beispielsweise, je nach Bedarf, eine mittig angeordnete Abwurfvorrichtung 46 und zwei nebeneinander angeordnete Abwurfvorrichtungen 46 hintereinander in der Aufnahmevorrichtung 41 angeordnet werden. Die Möglichkeit der Kombinationen ist hierbei nur abhängig von der Anzahl der Schlitze und der Breite des Pods 1, sowie der Länge des Ladebereichs 4 des Pods 1.

Figur 4 zeigt verschiedene Ansichten einer Ausführungsform des Multifunktions-Pods 1 mit einer Rakete 44. Hierbei zeigt Figur 4a eine Seitenansicht des Multifunktions-Pods 1 in Schnittdarstellung. In Figur 4b ist eine Schnittdarstellung des Multifunktions-Pods 1 aus Figur 4a quer zur Längsachse des Pods 1 dargestellt.

Der Multifunktions-Pod 1 weist in der dargestellten Ausführungsform als weitere Last 42 im weiteren Bereich 4 des Pods 1 eine Abwurfvorrichtung 46 mit einer Rakete 44 auf. Die Rakete 44 ist in der dargestellten Ausführungsform an einer Abwurfvorrichtung 46 lösbar befestigt. Die Abwurfvorrichtung 46 ist an der Aufnahmevorrichtung 41 des Pods 1 angebracht. In der Figur 4b ist die Aufnahmevorrichtung 41 durch den Tankbereich 3' verdeckt. Über eine kabellose oder kabelgebundene Signalverbindung (nicht dargestellt) können beispielsweise Signale von dem Flugzeug an die Abwurfvorrichtung 46 bzw. an die Rakete 44 selbst übermittelt werden, oder in umgekehrter Richtung von der Abwurfvorrichtung 46 bzw. der Rakete 44 an das Flugzeug.

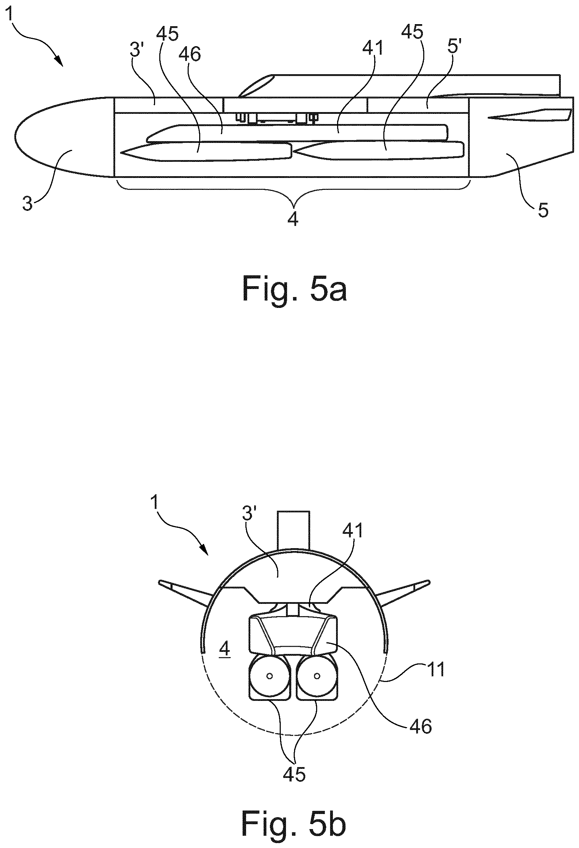

Figur 5 zeigt verschiedene Ansichten einer Ausführungsform des Multifunktions-Pods 1 mit einer Mehrzahl Bomben 45. Hierbei zeigt Figur 5a eine Seitenansicht des Multifunktions-Pods 1 in Schnittdarstellung. In Figur 5b ist eine Schnittdarstellung des Multifunktions-Pods 1 aus Figur 5a quer zur Längsachse des Pods 1 dargestellt.

Der Multifunktions-Pod 1 weist in der dargestellten Ausführungsform als weitere Last 42 im weiteren Bereich 4 des Pods 1 eine Abwurfvorrichtung 46 mit mehreren Bomben 45 auf. Die Bomben 45 sind in der dargestellten Ausführungsform an einer gemeinsamen Abwurfvorrichtung 46 für vier Bomben 45 lösbar befestigt. Die gemeinsame Abwurfvorrichtung 46 weist in der dargestellten Ausführungsform vier Positionen auf, an denen Bomben 45 befestigt werden können. Die gemeinsame Abwurfvorrichtung 46 ist an der Aufnahmevorrichtung 41 des Pods 1 angebracht. In der Figur 5b ist die Aufnahmevorrichtung 41 durch den Tankbereich 3' des Pods 1 verdeckt. Über eine kabellose oder kabelgebundene Signalverbindung (nicht dargestellt) können beispielsweise Signale von dem Flugzeug an die Abwurfvorrichtung 46 bzw. an die Bombe 45 selbst übermittelt werden oder in umgekehrter Richtung von der Abwurfvorrichtung 46 bzw. der Bombe 45 an das Flugzeug. Obwohl in der dargestellten Ausführungsform nur vier Bomben 45 dargestellt sind, die an der Abwurfvorrichtung lösbar angebracht sind, können abhängig von der Größe des Ladebereichs 4 bzw. abhängig von der Größe der angebrachten Bomben und/oder Raketen, diese in unterschiedlicher Kombination bzw. Anzahl im dem Ladebereich 4 des Pods 1 untergebracht werden.

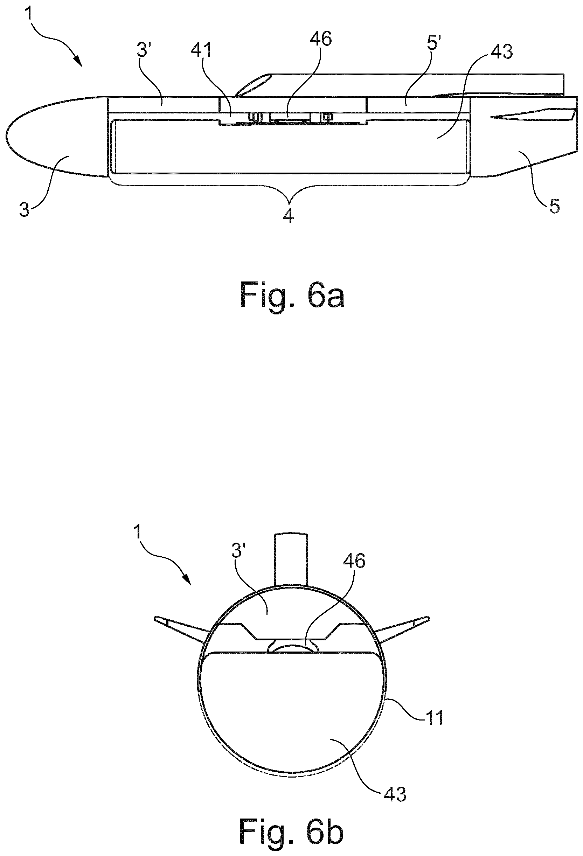

Figur 6 zeigt verschiedene Ansichten einer Ausführungsform des Multifunktions-Pods mit einem Tankbehälter 43 als weitere Last 42. Hierbei zeigt Figur 6a eine Seitenansicht des Multifunktions-Pods 1 in Schnittdarstellung. In Figur 6b ist eine Schnittdarstellung des Multifunktions-Pods 1 aus Figur 6a quer zur Längsachse des Pods 1 dargestellt.

Der Multifunktions-Pod 1 weist in der dargestellten Ausführungsform als weitere Last 42 im weiteren Bereich 4 des Pods 1 einen Tankbehälter 43 auf. Der Tankbehälter 43 ist über eine Haltevorrichtung 46 an der Aufnahmevorrichtung 41 des Pods 1 befestigt. In der Figur 6b ist die Aufnahmevorrichtung 41 durch den Tankbereich 3' des Pods 1 verdeckt. Um den Treibstoff aus dem Tankbehälter 43 in das Flugzeug zu befördern weist die Haltevorrichtung 46 einen Adapter (nicht dargestellt) auf. Der Adapter weist beispielsweise einen abgedichteten Anschluss für die Treibstoffleitung auf der mit dem Treibstoffbehälter 43 verbunden werden kann um die Treibstoffverbindung zwischen dem Treibstoffbehälter 43 und der Haltevorrichtung 46 und weiter zu dem Flugzeug zu bereitzustellen. Zur Beförderung des Treibstoffs aus dem Tankbehälter 43 in das Flugzeug kann beispielsweise das Flugzeug eine entsprechende Treibstoffpumpe aufweisen. Alternativ kann auch der Tankbehälter 43 mit einer Treibstoffpumpe versehen sein, die den Treibstoff aus dem Behälter 43 in das Flugzeug pumpt. Für den Lastausgleich des gesamten Flugzeugs kann es jedoch von Vorteil sein, wenn Treibstoff zwischen den verfügbaren Tankbehältern, wie beispielsweise dem Tankbehälter 43, dem ersten Tankbereich 3 und dem zweiten Tankbereich 5, intern und extern umgepumpt werden kann. Beispielsweise kann auch Treibstoff aus dem Flugzeugeigenen bzw. internen Tank in den Tankbereich 3, 5 des Pods 1 oder in den Tankbehälter 43, oder umgekehrt, zum Lastausgleich umgepumpt werden.

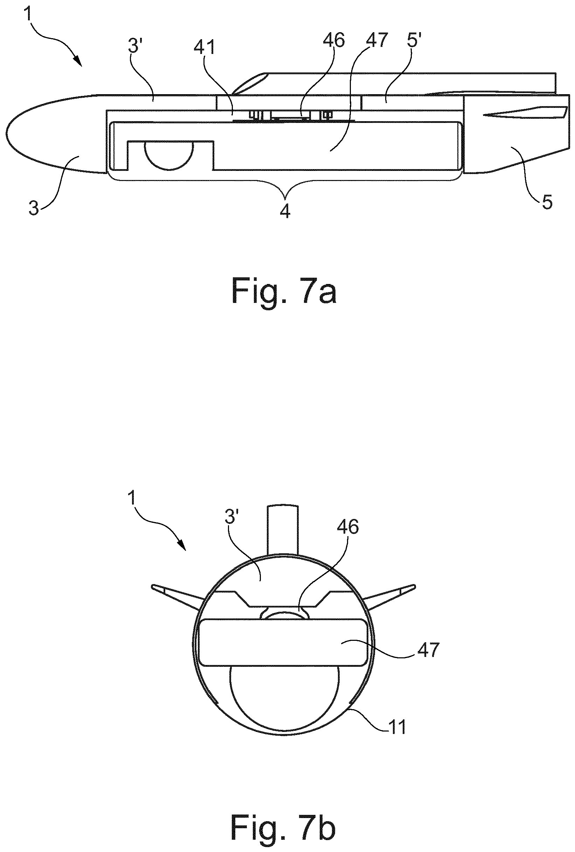

Figur 7 zeigt verschiedene Ansichten einer Ausführungsform des Multifunktions-Pods 1 mit einer Sensorvorrichtung 47 als weitere Last. Hierbei zeigt Figur 7a eine Seitenansicht des Multifunktions-Pods 1 in Schnittdarstellung. In Figur 7b ist eine Schnittdarstellung des Multifunktions-Pods 1 aus Figur 7a quer zur Längsachse des Pods 1 dargestellt.

Der Multifunktions-Pod 1 weist in der dargestellten Ausführungsform als weitere Last 42 im weiteren Bereich 4 des Pods 1 eine Sensorvorrichtung 47 auf. Die Sensorvorrichtung 47 besteht in der dargestellten Ausführungsform aus einem Behälter, der beispielsweise eine Überwachungskamera und elektronische Komponenten zur Aufzeichnung und Steuerung der Überwachungskamera, sowie zur Kommunikation der Sensorvorrichtung 47 mit einem Flugzeug oder einer Bodenstation aufweist. Die Sensorvorrichtung 47 ist über eine Haltevorrichtung 46 an der Aufnahmevorrichtung 41 des Pods 1 befestigt. In der Figur 7b ist die Aufnahmevorrichtung 41 durch den Tankbereich 3' des Pods 1 verdeckt. Die Haltevorrichtung 46 ist beispielweise mit der Sensorvorrichtung 47 fest verbunden. Die Haltevorrichtung 46 kann zur Aufnahme der Sensorvorrichtung 47 in dem Ladebereich 4 des Pods 1 in die Aufnahmevorrichtung 41, beispielsweise eingerastet werden. Über einen Adapter (nicht dargestellt) können beispielsweise Signale von der Sensorvorrichtung 47 an das Flugzeug oder von dem Flugzeug an die Sensorvorrichtung 47 übertragen werden. Die Signale können beispielsweise kabelgebunden und/oder kabellos von der Sensorvorrichtung 47 an den Adapter und von dem Adapter an das Flugzeug übertragen werden, bzw. von dem Flugzeug an die Sensorvorrichtung 47. Obwohl die Erfindung vor allem unter Bezugnahme auf bestimmte Ausführungsformen gezeigt und beschrieben worden ist, sollte von denjenigen, die mit dem Fachgebiet vertraut sind, verstanden werden, dass zahlreiche Änderungen bezüglich Ausgestaltung und Details daran vorgenommen werden können, ohne vom Bereich der Erfindung, wie durch die angefügten Ansprüche definiert, abzuweichen. Der Bereich der Erfindung wird somit durch die angefügten Ansprüche bestimmt, und es ist daher beabsichtigt, dass sämtliche Änderungen, welche unter den Wortsinn oder den Äquivalenzbereich der Ansprüche fallen, umfasst werden.

### Bezugszeichenliste

- 1: Pod
- 3, 3': erster Bereich
- 4: zweiter Bereich
- 41: Aufnahmevorrichtung
- 411: Adapter
- 42: weitere Last
- 43: Treibstoffbehälter
- 44: Rakete
- 45: Bombe
- 46: Abwurfvorrichtung
- 47: Sensorvorrichtung
- 5, 5': weiterer Bereich
- 11: Ladeöffnung
- 12: Verschlussvorrichtung
- 13: Wartungsöffnung

## Patentansprüche

1. Flugzeug, mit einem an dem Flugzeug lösbar befestigten Multifunktions-Pod (1),
wobei der Pod (1) mindestens zwei voneinander getrennte Bereiche (3, 4) aufweist;
wobei mindestens ein erster Bereich (3) des Pods (1) zur Aufnahme von Treibstoff vorgesehen ist, wobei der erste Bereich (3) des Pods (1) zur Aufnahme von Treibstoff im vorderen Bereich des Pods (1) angeordnet ist;
wobei ein zweiter Bereich (4) des Pods (1) mindestens eine Aufnahmevorrichtung (41) zur lösbaren Anbringung mindestens einer weiteren Last (42) aufweist;
wobei die weitere Last (42) über eine an der dem Flugzeug abgewandten Seite des Pods (1) aufweisende Ladeöffnung (11) an der Aufnahmevorrichtung (41) lösbar anbringbar ist, wobei ein dritter Bereich (5) des Pods (1) zur Aufnahme von Treibstoff vorgesehen ist, wobei der dritte Bereich (5) des Pods (1) im rückwärtigen Bereich des Pods (1) angeordnet ist,
wobei der zweite Bereich (4) in Längsrichtung des Pods (1) zwischen dem ersten Bereich (3) und dem dritten Bereich (5) angeordnet ist,
wobei der Multifunktions-Pod (1) während eines Flugs des Flugzeugs von diesem lösbar ist, **dadurch gekennzeichnet, dass** sich die Bereiche (3, 5) zur Aufnahme von Treibstoff, auf der dem Flugzeug zugewandten Seite des Pods, zumindest teilweise in den zweiten Bereich (4) erstrecken, und wobei die Aufnahmevorrichtung (41) zwischen den sich zumindest teilweise in den zweiten Bereich (4) erstreckenden Bereichen (3, 5) zur Aufnahme von Treibstoff angeordnet ist.

2. Flugzeug gemäß Anspruch 1,
wobei über die Aufnahmevorrichtung (41) unterschiedliche Arten von Lasten (42) variabel in dem zweiten Bereich (4) lösbar anbringbar sind.

3. Flugzeug nach einem der vorherstehenden Ansprüche,
wobei die weitere Last (42) mindestens ein Behälter (43) zur Aufnahme von Treibstoff ist.

4. Flugzeug nach Anspruch 3,
wobei die Aufnahmevorrichtung (41) mindestens einen Adapter zur Entnahme von Treibstoff aus dem Behälter (43) an das Flugzeug oder zur Befüllung des Behälters (43) mit Treibstoff aus dem Flugzeug über eine externe Betankungsvorrichtung aufweist.

5. Flugzeug nach einem der Ansprüche 1 bis 2,
wobei die weitere Last (42) mindestens eine Rakete (44) oder mindestens eine Bombe (45) ist.

6. Flugzeug nach Anspruch 5,
wobei die Aufnahmevorrichtung (41) mindestens eine Abwurfvorrichtung (46) für eine oder mehrere Raketen (44) aufweist.

7. Flugzeug nach Anspruch 5,
wobei die Aufnahmevorrichtung (41) mindestens eine Abwurfvorrichtung (46) für eine oder mehrere Bomben (45) aufweist.

8. Flugzeug nach einem der Ansprüche 6 oder 7,
wobei die Aufnahmevorrichtung (41) mindestens einen Adapter (411) zum Steuerung des Abwurfs der Raketen (44) oder Bomben (45) über das Flugzeug aufweist.

9. Flugzeug nach einem der Ansprüche 6 bis 8,
wobei mehrere Raketen (44) und/oder Bomben (45) parallel und/oder hintereinander an der Aufnahmevorrichtung (41) lösbar anbringbar sind.

10. Flugzeug nach einem der Ansprüche 1 bis 2,
wobei die weitere Last (42) mindestens eine Sensorvorrichtung (47) ist.

11. Flugzeug nach Anspruch 10,
wobei die Aufnahmevorrichtung (41) mindestens einen Adapter zur Kommunikation des Flugzeuges mit der Sensoreinrichtung (47) aufweist.

12. Flugzeug nach einem der vorherstehenden Ansprüche,
wobei die Ladeöffnung (11) mit mindestens einer Verschlussvorrichtung (12) verschließbar ist.

## Claims

1. Aircraft, with a multifunction pod (1) releasably fastened to the aircraft,
the pod (1) comprising at least two regions (3, 4) that are separate from one another;
at least one first region (3) of the pod (1) being provided for receiving fuel, the first region (3) of the pod (1) for receiving fuel being arranged in the front region of the pod (1);
a second region (4) of the pod (1) comprising at least one receiving device (41) for releasably attaching at least one additional load (42);
the additional load (42) being releasably attachable to the receiving device (41) via a loading opening (11) comprised on the side of the pod (1) facing away from the aircraft,
a third region (5) of the pod (1) being provided for receiving fuel, the third region (5) of the pod (1) being arranged in the rear region of the pod (1),
the second region (4) being arranged between the first region (3) and the third region (5) in the longitudinal direction of the pod (1),
the multifunction pod (1) being releasable from the aircraft during flight,
**characterized in that**
the regions (3, 5) for receiving fuel, on the side of the pod facing the aircraft, extend at least partially into the second region (4), and the receiving device (41) being arranged between the regions (3, 5) for receiving fuel that extend at least partially into the second region (4).

2. Aircraft according to Claim 1,
different types of loads (42) being releasably attachable in the second region (4) in various ways by means of the receiving device (41).

3. Aircraft according to one of the preceding claims,
the additional load (42) comprising at least one container (43) for receiving fuel.

4. Aircraft according to Claim 3,
the receiving device (41) comprising at least one adapter for removing fuel from the container (43) to the aircraft or for filling the container (43) with fuel from the aircraft by means of an external refuelling device.

5. Aircraft according to either of Claims 1 and 2,
the additional load (42) being at least one rocket (44) or at least one bomb (45).

6. Aircraft according to Claim 5,
the receiving device (41) comprising at least one launching device (46) for one or more rockets (44).

7. Aircraft according to Claim 5,
the receiving device (41) comprising at least one launching device (46) for one or more bombs (45).

8. Aircraft according to either of Claims 6 and 7,
the receiving device (41) comprising at least one adapter (411) for controlling the launch of the rockets (44) or bombs (45) by means of the aircraft.

9. Aircraft according to one of Claims 6 to 8,
a number of rockets (44) and/or bombs (45) being releasably attachable to the receiving device (41) in parallel and/or in succession.

10. Aircraft according to either of Claims 1 and 2,
the additional load (42) being at least one sensor device (47).

11. Aircraft according to Claim 10,
the receiving device (41) comprising at least one adapter for the communication of the aircraft with the sensor device (47).

12. Aircraft according to one of the preceding claims,
the loading opening (11) being closable by at least one closure device (12).

## Revendications

1. Aéronef, comprenant une nacelle multifonction (1) fixée de manière amovible à l'aéronef,
la nacelle (1) comprenant au moins deux zones (3, 4) séparées l'une de l'autre ;
au moins une première zone (3) de la nacelle (1) étant destinée à recevoir du carburant, la première zone (3) de la nacelle (1) destinée à recevoir du carburant étant disposée dans la région avant de la nacelle (1) ;
une deuxième zone (4) de la nacelle (1) comprenant au moins un dispositif de réception (41) servant à fixer de manière amovible au moins une charge supplémentaire (42) ;
la charge supplémentaire (42) pouvant être fixée de manière amovible au dispositif de réception (41) par le biais d'une ouverture de chargement (11) sur le côté de la nacelle (1) opposé à l'aéronef,
une troisième zone (5) de la nacelle (1) étant destinée à recevoir du carburant, la troisième zone (5) de la nacelle (1) étant disposée dans la région arrière de la nacelle (1),
la deuxième zone (4) étant disposée entre la première zone (3) et la troisième zone (5) dans la direction longitudinale de la nacelle (1),
la nacelle multifonction (1) pouvant être détachée de l'aéronef pendant un vol de celui-ci, **caractérisé en ce que** les zones (3, 5) destinées à recevoir du carburant s'étendent, sur le côté de la nacelle tourné vers l'aéronef, au moins partiellement dans la deuxième zone (4), et le dispositif de réception (41) étant disposé entre les zones (3, 5) s'étendant au moins partiellement dans la deuxième zone (4) et destinées à recevoir du carburant.

2. Aéronef selon la revendication 1,
dans lequel, par le biais du dispositif de réception (41), différents types de charge (42) peuvent être fixés de manière amovible et de façon variable dans la deuxième zone (4).

3. Aéronef selon l'une quelconque des revendications précédentes,
dans lequel la charge supplémentaire (42) est au moins un contenant (43) destiné à recevoir du carburant.

4. Aéronef selon la revendication 3,
dans lequel le dispositif de réception (41) comprend au moins un adaptateur servant à prélever du carburant à partir du contenant (43) vers l'aéronef ou à remplir le contenant (43) de carburant provenant de l'aéronef par le biais d'un dispositif de ravitaillement externe.

5. Aéronef selon la revendication 1 ou 2,
dans lequel la charge supplémentaire (42) est au moins un missile (44) ou au moins une bombe (45).

6. Aéronef selon la revendication 5,
dans lequel le dispositif de réception (41) comprend au moins un dispositif de largage (46) pour un ou plusieurs missiles (44).

7. Aéronef selon la revendication 5,
dans lequel le dispositif de réception (41) comprend au moins un dispositif de largage (46) pour une ou plusieurs bombes (45).

8. Aéronef selon la revendication 6 ou 7,
dans lequel le dispositif de réception (41) comprend au moins un adaptateur (411) servant à commander le largage des missiles (44) ou des bombes (45) par le biais de l'aéronef.

9. Aéronef selon l'une quelconque des revendications 6 à 8,
dans lequel plusieurs missiles (44) et/ou bombes (45) peuvent être fixés de manière amovible au dispositif de réception (41) parallèlement et/ou les uns derrière les autres.

10. Aéronef selon la revendication 1 ou 2,
dans lequel la charge supplémentaire (42) est au moins un dispositif de détection (47).

11. Aéronef selon la revendication 10,
dans lequel le dispositif de réception (41) comprend au moins un adaptateur servant à la communication de l'aéronef avec le dispositif de détection (47).

12. Aéronef selon l'une quelconque des revendications précédentes,
dans lequel l'ouverture de chargement (11) peut être fermée à l'aide d'au moins un dispositif de fermeture (12).
